# EUROPÄISCHE PATENTSCHRIFT

(11) **EP 2 583 067 B1**
(45) Veröffentlichungstag und Bekanntmachung des Hinweises auf die Patenterteilung: **03.07.2019**
(21) Anmeldenummer: 11719252.6
(22) Anmeldetag: 11.05.2011
(51) Int. Cl.: G01F 1/58

(54) **VERFAHREN ZUR HERSTELLUNG EINES MAGNETISCH-INDUKTIVEN DURCHFLUSSMESSGERÄTS**
METHOD OF PRODUCING A MAGNETIC-INDUCTIVE FLOW METER
PROCEDE DE PRODUCTION D'UN DÉBITMÈTRE MAGNÉTO-INDUCTIF

(30) Priorität: 17.06.2010 DE 102010030229
(43) Veröffentlichungstag der Anmeldung: 24.04.2013
(73) Patentinhaber: Endress+Hauser Flowtec AG, 4153 Reinach (CH)
(72) Erfinder: KERROM, Roger, 79540 Lörrach (DE); TSCHUDIN, Beat, CH-4153 Reinach (CH)
(74) Vertreter: Andres, Angelika Maria
(86) Internationale Anmeldenummer: PCT/EP2011/057592
(87) Internationale Veröffentlichungsnummer: WO 2011/157491

(56) Entgegenhaltungen:
- WO-A1-2008/059020
- WO-A1-2010/015534
- DE-A1- 3 004 870
- DE-A1-102007 004 826
- DE-B- 1 098 727
- US-A1- 2009 104 521

## Beschreibung

Die vorliegende Erfindung betrifft ein Verfahren zur Herstellung eines magnetisch-induktiven Durchflussmessgeräts durch Umgießen einer länglichen Elektrode mit verflüssigtem Kunststoff und ein magnetisch-induktives Durchflussmessgerät herstellbar nach dem erfindungsgemäßen Verfahren.

Magnetisch-induktive Durchflussmessgeräte nutzen für die volumetrische Strömungsmessung das Prinzip der elektrodynamischen Induktion aus und sind aus einer Vielzahl von Veröffentlichungen bekannt. Senkrecht zu einem Magnetfeld bewegte Ladungsträger des Mediums induzieren eine Messspannung in im Wesentlichen senkrecht zur Durchflussrichtung des Mediums und senkrecht zur Richtung des Magnetfeldes angeordneten Messelektroden. Die in die Messelektroden induzierte Messspannung ist proportional zu der über den Querschnitt des Messrohres gemittelten Strömungsgeschwindigkeit des Mediums, also proportional zum Volumenstrom. Ist die Dichte des Mediums bekannt, lässt sich der Massestrom in der Rohrleitung bzw. in dem Messrohr bestimmen. Die Messspannung wird üblicherweise über ein Messelektrodenpaar abgegriffen, das bezüglich der Koordinate entlang der Messrohrachse in dem Bereich maximaler Magnetfeldstärke angeordnet ist und wo folglich die maximale Messspannung zu erwarten ist. Die Elektroden sind üblicherweise galvanisch mit dem Medium gekoppelt; es sind jedoch auch magnetisch-induktive Durchflussmessgeräte mit berührungslos kapazitiv koppelnden Elektroden bekannt.

Das Messrohr kann dabei entweder aus einem elektrisch leitfähigen, nichtmagnetischen Material, z.B. Edelstahl, gefertigt sein, oder aus einem elektrisch isolierenden Material bestehen. Ist das Messrohr aus einem elektrisch leitfähigen Material gefertigt, so muss es in dem mit dem Medium in Kontakt kommenden Bereich mit einem Liner aus einem elektrisch isolierenden Material ausgekleidet sein. Der Liner besteht je nach Temperatur und Medium beispielsweise aus einem thermoplastischen, einem duroplastischen oder einem elastomeren Kunststoff. Es sind jedoch auch magnetisch-induktive Durchflussmessgeräte mit einer keramischen Auskleidung bekannt.

Eine Elektrode lässt sich im Wesentlichen in einen Elektrodenkopf, der zumindest teilweise mit einem Medium, welches das Messrohr durchströmt, in Kontakt kommt, und einen Elektrodenschaft, der fast vollständig in der Wandung des Messrohres eingebracht ist, unterteilen.

Die Elektroden sind neben dem Magnetsystem die zentralen Komponenten eines magnetisch-induktiven Durchflussmessgerätes. Bei der Ausgestaltung und Anordnung der Elektroden ist darauf zu achten, dass sie sich möglichst einfach in dem Messrohr montieren lassen und dass nachfolgend im Messbetrieb keine Dichtigkeitsprobleme auftreten; darüber hinaus sollen sich die Elektroden durch eine empfindliche und gleichzeitig störungsarme Messsignalerfassung auszeichnen.

Neben den Messelektroden, die zum Abgriff eines Messsignals dienen, werden oftmals zusätzliche Elektroden in Form von Bezugs- oder Erdungselektroden in das Messrohr eingebaut, die dazu dienen, ein elektrisches Referenzpotential zu messen oder teilgefüllte Messrohre zu erkennen.

Die Elektroden weisen meist längliche Elektrodenschäfte auf, mit divers geformten Einkerbungen. Die WO 2009/071615 A2 zeigt eine Elektrode mit einem Elektrodenschaft, mit mehreren kegelstumpfförmigen Dichtlippen, wobei die Durchmesser der Dichtlippen in ihrer Größe variieren. Gleichwertig sind Elektroden mit sägezahnförmigen Einstichen, wobei die Durchmesser der Elektrode an den Zahnspitzen der sägezahnförmigen Einstiche in ihrer Größe variieren.

In der DE 10 2008 038 161 und DE 10 2008 038 162 sind Elektroden zusammen mit anderen Bauteilen eines magnetisch-induktiven Durchflussmessgeräts mit dem Messrohr in einem separaten bzw. in einem gemeinsamen Kunststoffverguss eingegossen.

Die WO 10015534 A1 zeigt ein magnetisch-induktives Durchflussmessgerät mit einem Messaufnehmer, wobei der Messaufnehmer ein von einem Messstoff durchströmbares Messrohr umfasst, ein Magnetsystem zur Erzeugung eines Magnetfeldes umfasst, mindestens eine in das Messrohr eingebrachte Elektrode zum Erfassen einer elektrischen Spannung aufweist, wobei ein Befestigungsmittel vorgesehen ist, das zum Befestigen der Elektrode am Messrohr dient, wobei das Befestigungsmittel wenigstens teilweise aus Kunststoff besteht, und wobei das Befestigungsmittel durch eine Kunststoff-Schweißtechnik mit dem Messrohr verbunden ist, sowie ein Verfahren zur Fertigung eines magnetisch-induktiven Durchflussmessgerätes, wobei das magnetisch-induktive Durchflussmessgerät ein Messrohr aufweist, wobei das Messrohr wenigstens eine Bohrung aufweist, wobei eine Elektrode in die Bohrung eingebracht wird, wobei die Elektrode mittels einer Kunststoff-Schweißtechnik an dem Messrohr befestigt wird. Dabei weist die Elektrode in einer Ausgestaltung mindestens ein Dichtelement aufweist, das das Messrohr im Bereich der Bohrung abdichtet wobei das Dichtelement teilweise in einer Ausnehmung des Elektrodenschafts eingebracht sein kann. Jedoch besteht die Gefahr der Beschädigung des Dichtelements bei der Montage der Elektrode in einer Bohrung im Messrohr.

Die Fig. 5A der Druckschrift DE 10 2007 004 826 A1 zeigt eine Detailansicht einer mehrteiligen Messelektrode eines Durchflussmessgerätes, bei welcher ein erstes Messelektrodenteil 26 in einer Messrohrwandung 2 eingebettet ist. Man erkennt an der Stelle 28 eine einstichartige Ausformung. Man erkennt zudem aus Fig. 5A, dass die Messrohrwandung in diese Ausformung hineinragt.
Die Druckschrift WO 2010/015534 A1 offenbart ein Durchflussmessgerät, bei welchem eine Festlegung einer Messelektrode mittels einer Kunststoff-Schweißtechnik erfolgt. Die Messelektrode weist eine vorgeformte Ausnehmung 13 und einen O-Dichtring auf, welcher lose in der Ausformung angeordnet ist.
Die Druckschrift WO 2008/059020 A1 offenbart eine Messelektrode, welche eine Tannenbaumstruktur aufweist. Hier sorgen seitlich aus dem Elektrodenkörper hervorstehende Widerhaken und die Pilzkopfstruktur der Elektrode für eine bessere Dichtwirkung.

Die Aufgabe der Erfindung besteht darin, ein magnetisch-induktives Messgerät bereit zu stellen mit einer kostengünstig herzustellenden und hochwirksam dichtenden Elektrodenanordnung.

Die Aufgabe wird gelöst durch den Gegenstand des Anspruchs 1. Weiterbildungen und Ausgestaltungen der Erfindungen finden sich in den Merkmalen der abhängigen Ansprüche wider.

So wird ein Magnetisch-induktives Durchflussmessgeräts zum Messen des Volumen- oder Massestroms eines Mediums in einer Rohrleitung, mit einem Messrohr, das das Medium in Richtung der Längsachse des Messrohres durchströmt, mit einem Magnetsystem, das derart ausgestaltet ist, dass es ein das Messrohr durchsetzendes, im wesentlichen quer zur Längsachse des Messrohrs verlaufendes Magnetfeld erzeugt, mit zumindest einer mit dem Medium koppelnden Messelektrode, die in einem im wesentlichen senkrecht zum Magnetfeld liegenden Bereich in einer Bohrung in der Wand des Messrohres angeordnet ist, mit einem erfindungsgemäßen Verfahren hergestellt, welches folgende Verfahrensschritte umfasst:
Herstellen einer länglichen Elektrode mit zumindest einem ersten, quer zur Längsausdehnung der Elektrode umfänglich umlaufenden Einstich aus einem elektrisch leitfähigen Material;
Positionieren der Elektrode in einem Werkzeug;
zumindest abschnittsweise Umgießen der Elektrode mit Kunststoff, wobei der erste Einstich zur Aufnahme des Dichtrings vorgesehen und ausgestaltet ist, wobei der Dichtring vor Umgießen mit verflüssigtem Kunststoff positioniert wird, wobei der Dichtring aus einem Polymer hergestellt wird und dass die Temperatur des Kunststoffs während des zumindest abschnittsweisen Umgießens des Dichtrings unterhalb 350°C gehalten wird.

Insbesondere findet ein Spritzgussverfahren Anwendung, wobei der Kunststoff verflüssigt und damit die Elektrode umspritzt wird. Die längliche Elektrode weist zumindest eine Längsausdehnung längs einer Längsachse auf, welche größer ist, als eine Querausdehnung der Elektrode, senkrecht zur die Längsachse. Insbesondere ist das Verhältnis von Längsausdehnung zu Querausdehnung größer 2. Die Elektrode kann zuerst vollständig mit Kunststoff ummantelt sein, bevor der überschüssige Kunststoff wieder entfernt wird. Bevorzugt wird jedoch ein Ummanteln der Elektrode mit Kunststoff, wobei zumindest der Elektrodenkopf nicht von Kunststoff bedeckt ist. Weiterhin ist am, dem Elektrodenkopf gegenüberliegenden, Schaftende der Elektrode ebenfalls kein Kunststoff vorgesehen, um die Elektrode elektrisch zu kontaktieren. Die längliche Elektrode ist in einer Weiterbildung der Erfindung im betriebsbereiten magnetisch-induktiven Durchflussmessgerät mit ihrer Längsachse senkrecht zur Messrohrachse in der Messrohrwand positioniert.

Die Elektrode wird mit einem umfänglich umlaufenden Einstich hergestellt, beispielsweise aus Edelstahl, oder aber auch aus einem elektrisch leitfähigen Kunststoff. Weist die Elektrode einen kreisförmigen Querschnitt quer zur Längsachse der Elektrode auf, ist der Einstich radial umlaufend. Ist der Einstich im Querschnitt rechteckförmig, kann dann von einer Ringnut gesprochen werden. In anderen Ausgestaltungen der Elektrode können die Querschnitte elliptisch, oval oder mehreckig sein. Die Einstiche können ebenfalls verschiedenartige Querschnittsformen aufweisen, z.B. rechteckige oder halbkreisförmige oder sägezahnförmige.

Wird ein elastischer Dichtring an der Elektrode positioniert, wird er auf die Elektrodenoberfläche dichtend aufgebracht, z.B. auf den Mantel einer zylindrisch geformten Elektrode gespannt, wobei der Dichtring, in diesem Beispiel ein so genannter O-Ring, dann einen inneren, freien Durchmesser aufweist, geringer als der Durchmesser des Mantels der Elektrode an der Position des Dichtrings auf der Elektrode. Der Dichtring wird insbesondere an der Elektrode positioniert, bevor die Elektrode in dem Werkzeug positioniert wird; jedenfalls aber bevor die Elektrode mit verflüssigtem Kunststoff umgossen wird. In einem Ausführungsbeispiel wird der Dichtring in einem Einstich der Elektrode positioniert, welcher zur Aufnahme des Dichtrings vorgesehen und entsprechend ausgestaltet ist. Form und Größe des Dichtrings und des ersten Einstichs sind aufeinander abgestimmt; beispielsweise zueinander komplementär.

Während die Elektrode mit Kunststoff umgossen wird, wird der elastische Dichtring zumindest abschnittsweise mit Kunststoff bedeckt. Dabei wird die Temperatur des Kunststoffs unterhalb 350°C, insbesondere unterhalb 200°C gehalten. Verarbeitung und Material des Kunststoffs und Material des Dichtrings sind ebenfalls aufeinander abgestimmt. Der Dichtring besteht beispielsweise aus EPDM, Viton oder Kalrez.

Es versteht sich von selbst, dass der Dichtring sowohl gegenüber dem die Elektrode umgebenden Kunststoff, als auch gegenüber der Elektrode selbst fluiddicht dichtet. Weitere Einstiche können in der Elektrodenoberfläche vorgesehen sein, zur axialen Fixierung oder Bestimmung der Elektrode oder zur Leckagewegverlängerung. Diese haben ebenfalls rechteckige oder halbkreisförmige oder sägezahnförmige Querschnitte. Mindestens einer dieser weiteren Querschnitte wird, falls vorhanden, zumindest teilweise mit Kunststoff bei der Herstellung ausgefüllt.

Weist eine Elektrode, welche im betriebsbereiten magnetisch-induktiven Durchflussmessgerät so positioniert ist, dass ihre Längsachse senkrecht auf der Messrohrachse steht, mehrere, am Umfang der Elektrode senkrecht zur Längsachse der Elektrode umlaufenden Einstiche mit einem sägezahnförmigen Querschnitt auf, ist gemäß einer Ausgestaltung die Ausrichtung der Sägezähne so, dass die jeweiligen Zahnrücken von ihrem Zahngrund bis zu ihrer Zahnspitze in Richtung des strömungsführenden Lumes des Messrohrs zeigt, also eine Richtungskomponente in Richtung der Messrohrachse weist. Die Zahnlücken sind dabei zumindest abschnittsweise mit Kunststoff ausgegossen.

Auch eine so genannte Tannenbaumform, wie in der WO 2009/071615 A2 offenbart, wobei hier die Sägezähne unterschiedlich lange Zahnrücken oder unterschiedliche Keilwinkel aufweisen, so dass die Abstände der Zahnspitzen zur Längsachse der Elektrode verschieden sind, sind hiermit umfasst.
Ein Einstich wird aus fertigungstechnischen Gründen als solcher bezeichnet. Ein Einstich bildet eine Ausnehmung, z.B. in einem Drehteil. Natürlich verursacht ein einzelner Einstich, geometrisch gesehen, zwei neben dem Einstich liegende Ausformungen. So weist in einem Beispiel eine erfindungsgemäße Elektrode einen kragenförmigen Bund auf. Ein anderes Beispiel zeigt eine erfindungsgemäße Elektrode mit radial umlaufenden Ausformungen zur Verankerung der Elektrode und zur Verlängerung der Leckagewege. In beiden Beispiele können die Ausformungen auch dadurch erhalten werden, dass Ausnehmungen neben den Ausformungen vorgenommen werden, welche die Ausformungen erst als solche erscheinen lassen.

Ausgerichtet wird die Elektrode im Werkzeug beispielsweise mittels einer ersten und zweiten Kontur. So weist die Elektrode z.B. einen konischen Elektrodenkopf und/oder eine Bohrung im gegenüberliegenden Schaftende auf. Das Werkzeug oder ein das Lumen des Messrohrs formender Kern weisen die komplementären und zu den Konturen der Elektrode kompatiblen, d.h. mit den Konturen der Elektrode miteinander vereinbaren Konturen auf. Die Elektrode wird so z.B. mit ihrem konischen Elektrodenkopf auf eine komplementäre konische Senkung im Kern für das, im späteren Betrieb des magnetisch-induktiven Durchflussmessgeräts strömungsführenden, Lumen des Messrohrs angesetzt und somit formschlüssig mit dem Kern verbunden. Alternativ kann die Elektrode auch eine Nut statt einer Bohrung im, dem Elektrodenkopf gegenüberliegenden Ende des Elektrodenschafts aufweisen, oder auch per Magnetismus im Werkzeug ausgerichtet und während des Gießvorgangs gehaltert werden.

In einem Ausführungsbeispiel wird die Elektrode mit Kunststoff umgossen, welcher gleichzeitig das Messrohr bildet. In einer anderen Ausgestaltung wird in einem ersten Verfahrensschritt das Messrohr mit einem für die Positionierung der Elektrode vorgesehenen Raum gegossen und anschließend die Elektrode in diesen Raum eingesetzt und mit Kunststoff umgossen, wobei das vorgefertigte Messrohr hier als Werkzeug dient, und die Ummantelung der Elektrode mit Kunststoff, welche im zweiten Verfahrensschritt hergestellt wird, ebenfalls Teil des Messrohrs ist. Weitere Ausgestaltungen zeigen die Elektrode ummantelt von Kunststoff, wobei die Elektrode mitsamt dem Mantel in eine Bohrung in der Messrohrwand eingesetzt wird und beispielsweise mit dieser anschließend verschweißt wird, insbesondere mit Ultraschallschweißen.

Wird mit dem verflüssigten Kunststoff zumindest ein Teil des Messrohrs, insbesondere eine Halbschale, gegossen und wird ein Kern, welcher ein Lumen des Messrohrs formt, und eine zu einer zweiten Kontur der Elektrode komplementäre vierte Kontur aufweist, wobei die Elektrode an dem Kern durch formschlüssiges Ausrichten der zweiten und vierten komplementären Kontur zueinander positioniert wird, werden diese Teile des Messrohrs, z.B. zwei baugleiche Halbschalen, mit anderen Teilen anschließend miteinander verbunden, insbesondere miteinander stoffschlüssig verschweißt.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt den Querschnitt durch ein Messrohr und eine Elektrode eines erfindungsgemäßen magnetisch-induktiven Durchflussmessgeräts in einer ersten Ausgestaltung,
- Fig. 2: zeigt den Querschnitt durch ein Messrohr und eine nicht erfindungsgemäße Elektrode eines beispielhaften magnetisch-induktiven Durchflussmessgeräts,
- Fig. 3: zeigt den Querschnitt durch eine nicht erfindungsgemäße Elektrode eines magnetisch-induktiven Durchflussmessgeräts mit einer Ummantelung aus Kunststoff,
- Fig. 4: zeigt mehrere Querschnitte durch unterschiedliche nicht erfindungsgemäße Elektrodenformen.

Die vorliegende Erfindung betrifft ein Verfahren zur Herstellung eines magnetisch-induktiven Durchflussmessgeräts, insbesondere der Prozessmesstechnik, zur Ermittlung des Durchflusses eines Messmediums durch ein Messrohr.

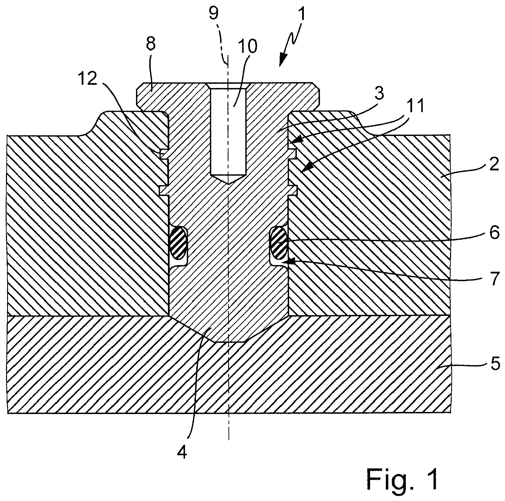

In Fig. 1 ist nun ein Querschnitt durch eine Elektrodenanordnung eines magnetisch-induktiven Durchflussmessgerätes dargestellt. Die Elektrode 1 ist in die Wand 2 eines Messohrs eingebracht und weist einen Elektrodenschaft 3 und einen im Messbetrieb vom Messstoff 5 wenigstens teilweise benetzten Elektrodenkopf 4 auf. Messstoffe 5 können sowohl Reinstoffe als auch Gemische sein. Der Elektrodenkopf 4 weist, in dem Bereich in dem er in das Lumen des Messrohrs hineinragt, eine konische Form auf. Im Bereich der Messrohrwand 2 weist der Elektrodenschaft 3 eine zylindrische Grundform auf. Ein Querschnitt durch die Elektrode 1 in einer parallelen Ebene zum O-Ring 6 ist näherungsweise kreisrund, im Rahmen der üblichen und einem Fachmann geläufigen konstruktiven und fertigungsbedingten Toleranzen. Auch andere Formen sind möglich. Ovale oder elliptische Querschnitte versprechen eine bessere Spannungsverteilung bei Wärmeausdehnung des Messrohrs.

Darüber hinaus ist im Bereich des Elektrodenschafts 3 ein erster radialer Einstich 7 vorgesehen, in welchem ein Dichtring, hier der O-Ring 6 positioniert ist. Der O-Ring 6 ragt geringfügig über den Rand des Elektrodenschafts 3 hinaus, so dass er eine erste Dichtstufe bildet und die Elektrode 1 im Bereich der Messrohrwand 2 abdichtet. An dem vom Elektrodenkopf 4 abgewandten Ende weist die Elektrode einen Bund 8 auf, mit dem die Elektrode 1 abschließt. Der Bund 8 steht senkrecht von der Elektrodenlängsachse 9 ab. Entlang der Elektrodenlängsachse 9 weist die Elektrode 1 in dem vom Elektrodenkopf 4 abgewandeten Ende eine Bohrung 10 auf, in die ein nicht dargestellter Stecker einbringbar ist. Der Stecker dient dabei zum Abgreifen des mittels des Elektrodenkopfs 4 im Messstoff 5 gemessen elektrischen Potentials. Die Bohrung 10 dient weiterhin während des Herstellungsverfahrens als zweite Kontur zur Ausrichtung der Elektrode im Werkzeug. In diesem Sinn als erste Kontur dient der konisch ausgeformte Elektrodenkopf 4.

Im Herstellungsverfahren zu dieser Ausgestaltung der Erfindung wird also beispielsweise die Elektrode 1 in ein Spritzgusswerkzeug eingelegt. Dafür wird der Elektrodenkopf 4 in einer zum Elektrodenkopf 4 komplementären Ausformung in einem Kern positioniert. Der Kern bildet später das Lumen des Messrohrs, in welchem der Messstoff 5 strömt. Weiterhin wird die Elektrode 1 mittels eines Dorns in der Bohrung 10 im Elektrodenschaft 3 fixiert, bevor die Elektrode mit Kunststoff umspritzt wird. In diesem Beispiel wird die Elektrode 1 direkt in die Messrohrwand 2, welche hier aus einem Guss hergestellt wird, eingegossen. In anderen Beispielen wird die Messrohrwand 2 in zwei oder mehr Güssen hergestellt.

Das Messrohr ist wenigstens im Bereich der Elektroden von einem Gehäuse, welches hier nicht gezeigt ist, umgeben. Das vom Messstoff 5 durchflossene, unter einem Prozessdruck stehende Messrohr wird im Bereich des Elektrodenschafts 3 durch eine erste Dichtungsstufe, bestehend aus einem radial angeordneten O-Ring 6, druck- und flüssigkeitsdicht verschlossen. Der O-Ring 6 weist die erforderlichen physikalischen und chemischen Eigenschaften auf, die für den Gebrauch in typischen Messstoffen wie z.B. Trink- und Abwasser notwendig sind. Weiterhin ist der O-Ring 6 speziell für einen Einsatz in Verbindung mit aus Kunststoff bestehenden Materialien ausgelegt. Typische Materialen für erfindungsgemäße Messrohre sind z.B. PA, PP, PPE, PSU, PPS, PEEK oder PVC. Die Elektroden sind z.B. aus nichtrostenden Edelstählen, Tantal, Hastelloy, Platin oder Titan gefertigt.

Der O-Ring 6 wir in diesem Beispiel vom Kunststoff der Messrohrwand 2 abschnittsweise umschlossen. An den Abschnitten, wo der O-Ring 6 auf der Elektrode 1 selbst aufliegt, ist er natürlich nicht von Kunststoff bedeckt. Der erste Einstich 7 wird hier ebenfalls vom Kunststoff der Messrohrwand 2 teilweise ausgefüllt. Der O-Ring 6 wird auf der Elektrode 7, hier im Einstich 7, positioniert, bevor die Elektrode 1 im Werkzeug positioniert wird.

Neben dem ersten Einstich 7, in welchem der O-Ring 6 positioniert ist, weist die Elektrode weitere Einstiche 11 auf, welche mit dem Kunststoff der Messrohrwand 2 ausgegossen sind. Durch sie werden Ausformungen 12 der Elektrode 1 definiert, welche zur axialen Verankerung der Elektrode 1 entlang der Längsachse 9 in der Messrohrwand 2 dienen und welche gleichzeitig die Leckagewege verlängern. Hier wiesen die Einstiche 7 und 11 rechteckige Form im Querschnitt auf, jedoch sind viele Formen denkbar, so z.B. auch mit Hinterschnitt oder halbkreisförmig zur Aufnahme eines O-Rings 6 mit kreisförmigem Schnurquerschnitt.

Der erste Einstich 7 weist eine Tiefe senkrecht zur Längsachse 9 der Elektrode 1 auf und eine Breite parallel zur Längsachse 9 der Elektrode 1. Auch der Dichtungsring, hier O-Ring 6, weist eine Schnurdicke in Richtung der Längsachse 9 und eine Schnurbreite senkrecht zur Längsachse 9 der Elektrode 1 auf. Ist der Dichtungsring, wie in dieser Figur veranschaulicht, ein O-Ring 6, so ist die Schnurdicke und die Schnurbreite gleich und entspricht dem Schnurdurchmesser von. Das Verhältnis von Schnurdicke zur Einstichsbreite liegt gemäß einer Ausgestaltung bei höchstens 0,8 und bei mindestens 0,6, wobei dann das Verhältnis von Schnurbreite zu Einstichstiefe höchstens 1,5 und mindestens 1,2 beträgt. Ist der Dichtungsring ein O-Ring 6 ist die freie Fläche durch den Innendurchmesser des O-Rings 6 definiert. Der Dichtungsring wird somit dichtend auf die Elektrode gespannt.

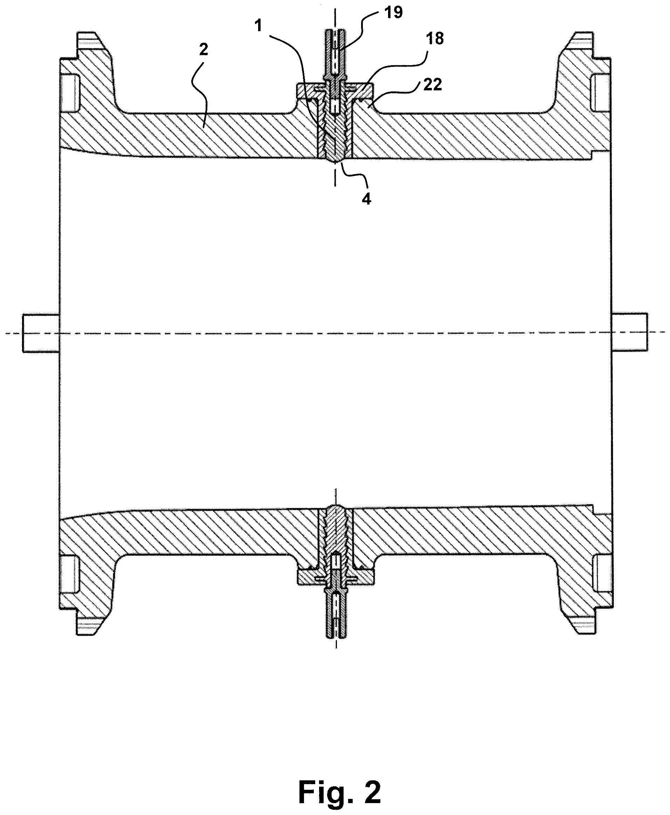

Fig. 2 zeigt eine nicht erfindungsgemäße Ausgestaltung einer Elektrode. Eine Elektrode 1 weist eine Ummantelung 18 aus Kunststoff auf, welche in die Messrohrwand 2 eingesetzt ist. Diese Ummantelung 18 ist beispielsweise aus demselben Kunststoff hergestellt, wie die Messrohrwand 2. Die Elektrode 1 ist in die Ummantelung 18 eingegossen, wobei die Oberfläche der Elektrode 1 zumindest abschnittsweise mit einem Kunststoff bedeckt ist. Zumindest ein freier Abschnitt der Oberfläche der Elektrode 1 ist nicht mit dem Kunststoff bedeckt, hier der Elektrodenkopf 4 und das ihm gegenüberliegende Ende der Elektrode 1 mit einer Bohrung längs der Längsachse der Elektrode 1, in welcher hier ein Stecker 19 zur elektrischen Kontaktierung der Elektrode 1 eingeführt ist. Das von den Elektroden abgegriffene Potential wird an eine Mess- und/oder Betriebsschaltung - nicht explizit gezeigt - übermittelt. Aus dem elektrischen Potential wird eine dem Durchfluss proportionale Spannung abgeleitet und daraus der Durchfluss bestimmt.

Die Ummantelung 18 mitsamt der Elektrode 1 kann separat zum Messrohr hergestellt werden, oder in einem Verfahren in einem nachfolgenden Verfahrensschritt.

Wird zuerst ein Messrohr mit einem für den Einbau der Elektrode mit Ummantelung vorgesehenen Raum gefertigt, wird dieser Raum von einem Kern oder einem Werkzeug frei gehalten. Dieser Kern wird anschließend entfernt. Danach kann die Elektrode 1 mitsamt Ummantelung 18 eingesetzt werden oder nur die Elektrode 1 wird eingesetzt und der freie Raum mit verflüssigtem Kunststoff ausgefüllt. Dies hat den Vorteil, die Ummantelung nicht extra am Messrohr anschweißen zu müssen.

Natürlich sind neben dem beschriebenen Spritzgussverfahren auch andere Urformverfahren mit umfasst. So lässt sich eine Elektrode auch in einem Tauchbad herstellen, wobei sich verflüssigter Kunststoff auf der Elektrode festsetzt und anschließend mechanisch bis zur gewünschten Form bearbeitet wird. Neben Beschichtungsverfahren sind solche Verfahren jedoch aufwendiger als das beschriebene Spritzgießen.

Die Ummantelung 18 bildet einen Teil der Messrohrwand 2. Zumindest der die Elektrode 1 umgebende und berührende Teil der Messrohrwand 2 ist aus Kunststoff hergestellt. Nun bestehen weitere Alternativen zu einer Ummantelung 18 um eine Elektrode 1, welche in ein fertiges Messrohr eingesetzt wird und einer Elektrode 1, um welche das komplette Messrohr gegossen wird. So kann einerseits die Messrohrwand 2 einen Freiraum aufweisen, in welchen die Elektrode 1 eingesetzt und welcher anschließend mit Kunststoff ausgegossen wird, andererseits kann um die Elektrode 1 nur ein Teil des Messrohrs, z.B. eine Halbschale gegossen werden, wobei die Halbschalen anschließend zu einem Messrohr vereint, z.B. miteinander verschweißt werden. Eindeutige fertigungstechnische Vorteile der Halbschalen liegen dem Fachmann auf der Hand. Neben dem eigentlichen strömungsführenden Teil des Messrohrs weist ein Messrohr weitere Bauteile auf, wie z.B. Flansche. Diese können, müssen aber natürlich nicht in einem einzigen Verfahren hergestellt werden. Insbesondere Flansche lassen sich einfach an ein Messrohr anbringen.

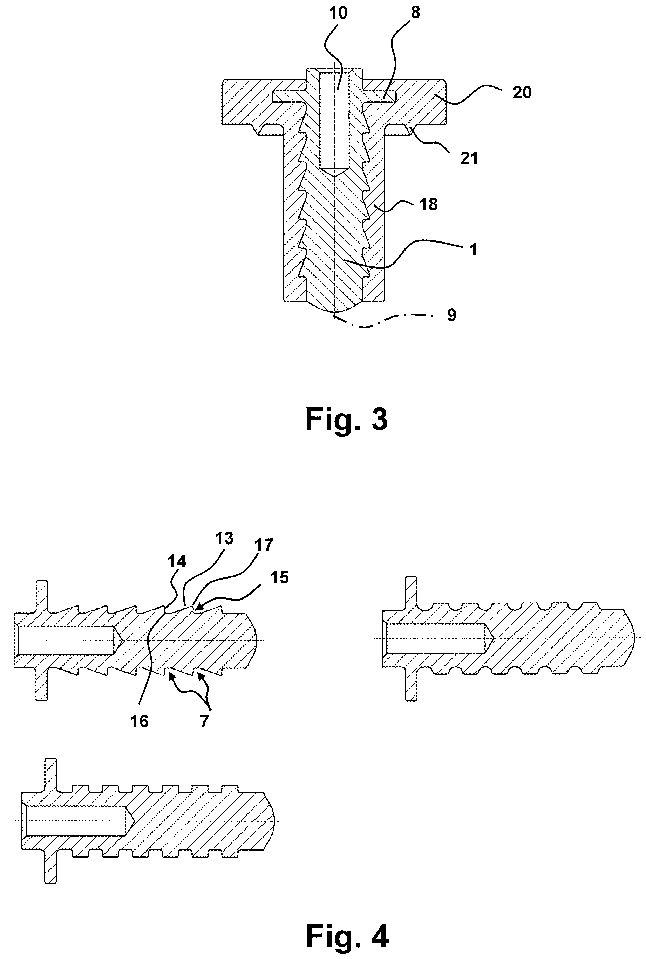

In Fig. 3 ist eine nicht erfindungsgemäße Elektrode 1 mitsamt ihrer, zum Messrohr separat hergestellter Ummantelung 18 im Schnitt gezeichnet. Die Elektrode 1 weist eine Bohrung 10 zur Aufnahme eines Steckers und mehrere sägezahnförmige Einstiche auf. Ein elastischer Dichtungsring ist nicht vorgesehen. Dichtheit der Verbindung Ummantelung 18 und Elektrode 1 wird durch die Vielzahl an Einstichen erreicht. Ein Bund 8 steht senkrecht von der Elektrodenlängsachse 9 im Bereich des Ende des Elektrodenschafts ab, gegenüber dem Elektrodenkopf, zur Fixierung der Elektrode 1 im Werkzeug und/oder der Verbindung mit dem Kunststoff der Ummantelung 18.

Der Kunststoff der Ummantelung 18 weist gleichartige Eigenschaften wie der Kunststoff der Messrohrwand auf, oder ist gar gleich. Die Ummantelung 18 ist im Bereich des kragenförmigen Bunds 8 der Elektrode 1 scheibenförmig ausgestaltet. Diese Scheibe 20 der Ummantelung liegt im montierten Zustand auf einer auf der Außenseite des Messrohrs angeordneten Auflagefläche anliegt. Die Auflagefläche wird geformt durch eine Halterung 22.

Die in das Messrohr eingebrachte zylindrische Bohrung ist von der Halterung 22 in Form eines kragenartigen Ansatzes umgeben. Die Halterung 22 befindet sich auf der Außenseite des Messrohrs. Das Messrohr besteht dabei wenigstens im Bereich der Bohrung und der Halterung 22 aus Kunststoff. Die Ummantelung 18 mitsamt eingebetteter Elektrode liegt mit ihrer Scheibe 20 auf der ebenen die Halterung abschließenden Auflagefläche auf. Die Auflagefläche der Scheibe 20 verläuft senkrecht zur Elektrodenlängsachse und parallel zur Längsachse des Messrohrs. Die Scheibe 20 ist durch ein Kunststoff-Schweißverfahren mit der Halterung 22 verbunden.

Die Scheibe weist zusätzlich entlang der Fügezone auf der Halterung 22 eine Schweißlippe 21 auf. Die Schweißlippe 21 hat einen dachförmigen Querschnitt und wird mit der Halterung 22 stoffschlüssig verschmolzen. Dadurch ist die Bohrung druck- und flüssigkeitsdicht abgedichtet.

Zu den Bezeichnungen an einem sägezahnförmigen Einstich siehe die nachfolgende Beschreibung zur Fig. 4.

In Fig. 4 sind verschiedenartige nicht erfindungsgemäße Elektroden skizziert. Die Elektroden weisen hierbei die gleiche Grundform auf, unterscheiden sich jedoch durch ihre Einstiche 11. Neben der bereits beschriebenen Sägezahnform sind noch halbkreisförmige Einstiche 11 und rechteckförmige Einstiche 11 zu sehen. Aber auch andere Formen zur Verankerung der Elektrode und zur Verlängerung der Leckagewege sind möglich, z.B. auch mit Hinterschnitt.

Hier noch kurz zu den Bezeichnungen an einem sägezahnförmigen Einstich 7. Der Einstich 7 wird durch den Zahnrücken 13 und die Zahnbrust 14 begrenzt. Der freie Raum dazwischen wird als Zahnlücke 15 bezeichnet. Der Schnittpunkt zwischen Zahnrücken 13 und Zahnbrust 14 eines einzigen sägezahnförmigen Einstichs 7 heißt Zahngrund 16, Der Schnittpunkt zwischen Zahnrücken 13 und Zahnbrust 14 von zwei benachbarten sägezahnförmigen Einstichen 7 heißt Zahnspitze 17. Keilwinkel wir der Winkel zwischen Zahnrücken 13 und Zahnbrust 14 genannt.

### Bezugszeichenliste

- 1: Elektrode
- 2: Messrohrwand
- 3: Elektrodenschaft
- 4: Elektrodenkopf
- 5: Messstoff
- 6: Dichtungsring
- 7: Erster Einstich
- 8: Bund
- 9: Elektrodenfängsachse
- 10: Bohrung im Elektrodenschaft
- 11: Zweite Einstiche
- 12: Ausformungen am Elektrodenschaft
- 13: Zahnrücken eines Sägezahns
- 14: Zahnbrust eines Sägezahns
- 15: Zahnlücke eines Sägezahns
- 16: Zahngrund eines Sägezahns
- 17: Zahnspitze eines Sägezahns
- 18: Ummantelung
- 19: Stecker
- 20: Scheibe
- 21: Schweißlippe
- 22: Halterung

## Patentansprüche

1. Verfahren zur Herstellung eines magnetisch-induktiven Durchflussmessgeräts durch Umgießen einer Elektrode (1) mit verflüssigtem Kunststoff,
wobei die Elektrode aus einem elektrisch leitfähigen Material und mit zumindest einem ersten, senkrecht zu einer Längsausdehnung der Elektrode (1) umfänglich umlaufenden Einstich (1) hergestellt wird,
wobei die Elektrode (1) in einem Werkzeug positioniert wird und zumindest abschnittsweise mit verflüssigtem Kunststoff umgossen wird,
wobei der erste Einstich (7) der Elektrode (1) zumindest abschnittsweise mit verflüssigtem Kunststoff umgossen wird,
**dadurch gekennzeichnet, dass**
ein elastischer Dichtring (6) in dem ersten Einstich (7) der Elektrode (1) zur Aufnahme des Dichtrings (6) positioniert wird, wobei der elastische Dichtring (6) zumindest abschnittsweise mit Kunststoff umgossen wird,
wobei der erste Einstich zur Aufnahme des Dichtrings vorgesehen und ausgestaltet ist,
wobei der Dichtring vor Umgießen mit verflüssigtem Kunststoff positioniert wird, wobei der Dichtring (6) aus einem Polymer hergestellt wird und wobei die Temperatur des Kunststoffs während des zumindest abschnittsweisen Umgießens des Dichtrings (6) unterhalb 350°C gehalten wird.

2. Verfahren zur Herstellung eines magnetisch-induktiven
Durchflussmessgeräts nach Anspruch 1,
**dadurch gekennzeichnet,**
**dass** die Elektrode (1) mit einem kreisrunden oder elliptischen oder ovalen Querschnitt hergestellt wird.

3. Verfahren zur Herstellung eines magnetisch-induktiven
Durchflussmessgeräts nach einem der Ansprüche 1 bis 2,
**dadurch gekennzeichnet,**
**dass** die Elektrode (1) mit weiteren Einstichen (11) hergestellt wird, welche zumindest abschnittsweise mit verflüssigtem Kunststoff ausgegossen werden.

4. Verfahren zur Herstellung eines magnetisch-induktiven
Durchflussmessgeräts nach einem der Ansprüche 1 bis 4,
**dadurch gekennzeichnet,**
**dass** das Werkzeug eine zu einer ersten Kontur der Elektrode (1) komplementäre dritte Kontur aufweist und dass das Positionieren der Elektrode (1) in dem Werkzeug durch formschlüssiges Ausrichten der komplementären ersten und dritten Kontur zueinander erfolgt.

5. Verfahren zur Herstellung eines magnetisch-induktiven Durchflussmessgeräts nach einem der Ansprüche 1 bis 4,
**dadurch gekennzeichnet,**
**dass** mit dem verflüssigten Kunststoff ein Messrohr gegossen wird und dass ein Kern, welcher ein Lumen des Messrohrs formt, eine zu einer zweiten Kontur der Elektrode (1) komplementäre vierte Kontur aufweist, wobei die Elektrode (1) an dem Kern durch formschlüssiges Ausrichten der zweiten und vierten komplementären Kontur zueinander positioniert wird.

6. Verfahren zur Herstellung eines magnetisch-induktiven Durchflussmessgeräts nach einem der Ansprüche 1 bis 4,
**dadurch gekennzeichnet,**
**dass** in einem ersten Verfahrensschritt eine Messrohrwand (2) des Messrohrs aus verflüssigtem Kunststoff gegossen wird und dass in einem zweiten Verfahrensschritt eine Ummantelung um die Elektrode (1) in einen dafür vorgesehenen, freien Raum in der Messrohrwand (2) aus verflüssigtem Kunststoff gegossen wird.

7. Verfahren zur Herstellung eines magnetisch-induktiven Durchflussmessgeräts nach Anspruch 6,
**dadurch gekennzeichnet,**
**dass** in beiden Verfahrensschritten der gleiche Kunststoff verwendet wird.

8. Verfahren zur Herstellung eines magnetisch-induktiven Durchflussmessgeräts nach einem der Ansprüche 1 bis 7,
**dadurch gekennzeichnet,**
**dass** zumindest der erste Einstich (7) mit einem rechteckigen oder einem kreisrunden Querschnitt hergestellt wird.

9. Verfahren zur Herstellung eines magnetisch-induktiven
Durchflussmessgeräts nach einem der Ansprüche 3 bis 8,
**dadurch gekennzeichnet,**
**dass** zumindest ein zweiter Einstich (11) der Elektrode (1) mit einem sägezahnförmigen Querschnitt hergestellt wird, wobei die Elektrode (1) so im Messrohr positioniert wird, dass ein Zahnrücken (13) von einem Zahngrund (16) bis zu einer Zahnspitze (17) des sägezahnförmigen Querschnitts in Richtung eines strömungsführenden Lumens des Messrohrs zeigt.

10. Magnetisch-induktives Durchflussmessgeräts zum Messen des Volumen- oder Massestroms eines Mediums in einer Rohrleitung, mit einem Messrohr, dass das Medium (5) in Richtung der Längsachse des Messrohres durchströmt, mit einem Magnetsystem, das derart ausgestaltet ist, dass es ein das Messrohr durchsetzendes, im Wesentlichen quer zur Längsachse des Messrohrs verlaufendes Magnetfeld erzeugt, mit zumindest einer mit dem Medium koppelnden Messelektrode (1), die in einem im Wesentlichen senkrecht zum Magnetfeld liegenden Bereich in einer Bohrung (10) in der Wandung (2) des Messrohres angeordnet ist, **dadurch gekennzeichnet, dass** das magnetisch-induktive Durchflussmessgerät erhältlich ist durch ein Verfahren nach einem der Ansprüche 1 bis 9.

## Claims

1. Procedure for the fabrication of an electromagnetic flowmeter by the potting of an electrode (1) using liquefied plastic, wherein the electrode is made from an electrically conductive material and made with at least a first peripheral recess (7) that is perpendicular to a longitudinal extension of the electrode (1),
wherein the electrode (1) is positioned in a tool and is at least partially potted with liquid plastic,
wherein the first recess (7) of the electrode (1) is at least partially potted with liquefied plastic,
**characterized in that**
an elastic sealing ring (6) is positioned in the first recess (7) of the electrode (1) to receive the sealing ring (6), wherein the elastic sealing ring (6) is at least partially potted with plastic,
wherein the first recess is provided and designed to receive the sealing ring, wherein the sealing ring is positioned before potting with liquefied plastic, wherein the sealing ring (6) is made from a polymer and
wherein the temperature of the plastic is maintained below 350 °C during the at least partial potting of the sealing ring (6).

2. Procedure designed for the fabrication of an electromagnetic flowmeter as claimed in Claim 1,
**characterized in that**
the electrode (1) is made with a circular or elliptical or oval cross-section.

3. Procedure designed for the fabrication of an electromagnetic flowmeter as claimed in one of the Claims 1 to 2,
**characterized in that**
the electrode (1) is made with additional recesses (11), which are at least partially filled with liquefied plastic.

4. Procedure designed for the fabrication of an electromagnetic flowmeter as claimed in one of the Claims 1 to 3,
**characterized in that**
the tool has a third contour that is complementary to a first contour of the electrode (1) and **in that** the positioning of the electrode (1) in the tool is done by the positive-fit alignment of the complementary first and third contour in relation to one another.

5. Procedure designed for the fabrication of an electromagnetic flowmeter as claimed in one of the Claims 1 to 4,
**characterized in that**
a measuring tube is cast with the liquefied plastic and **in that** a core, which forms a channel of the measuring tube, has a fourth contour that is complementary to a second contour of the electrode (1), wherein the electrode (1) is positioned on the core by the positive-fit alignment of the second and fourth complementary contour in relation to one another.

6. Procedure designed for the fabrication of an electromagnetic flowmeter as claimed in one of the Claims 1 to 4,
**characterized in that**
in a first process step a measuring tube wall (2) of the measuring tube is molded from liquefied plastic and **in that** in a second process step a jacket of liquefied plastic is cast around the electrode (1) in a free space provided for this purpose in the measuring tube wall (2).

7. Procedure designed for the fabrication of an electromagnetic flowmeter as claimed in Claim 6,
**characterized in that**
the same plastic is used in both process steps.

8. Procedure designed for the fabrication of an electromagnetic flowmeter as claimed in one of the Claims 1 to 7,
**characterized in that**
at least the first recess (7) is made with a square or circular section.

9. Procedure designed for the fabrication of an electromagnetic flowmeter as claimed in one of the Claims 3 to 8,
**characterized in that**
at least a second recess (11) of the electrode (1) is made with a cross-section in the form of a saw-tooth,
wherein the electrode (1) is positioned in the measuring tube in such a way that a back of a tooth (13) points in the direction of an interior channel of the measuring tube, which guides the flow, from a tooth base (16) to tooth tip (17) of the cross-section in the form of a saw-tooth.

10. Electromagnetic flowmeter designed to measure the volume flow or mass flow of a medium in a pipe with a measuring tube through which the medium (5) flows in the direction of the longitudinal axis of the measuring tube, with a magnet system which is designed in such a way that it generates a magnetic field which passes through the measuring tube and is essentially perpendicular to the longitudinal axis of the measuring tube, with at least one measuring electrode (1) coupled with the medium, said electrode being arranged in a bore (10) in the wall (2) of the measuring tube in an area that is essentially perpendicular to the magnetic field, **characterized in that** the electromagnetic flowmeter can be obtained with a procedure as claimed in one of the Claims 1 to 9.

## Revendications

1. Procédé destiné à la fabrication d'un débitmètre magnéto-inductif par le moulage d'une électrode (1) au moyen de plastique liquéfié, l'électrode étant constituée d'un matériau électriquement conducteur et munie d'une première gorge (7) périphérique s'étendant perpendiculairement à une dilatation longitudinale de l'électrode (1),
pour lequel l'électrode (1) est positionnée dans un outil et moulée au moins partiellement au moyen de plastique liquéfié,
pour lequel la première gorge (7) de l'électrode (1) est moulée au moins partiellement au moyen de plastique liquéfié,
**caractérisé**
**en ce qu'**une bague d'étanchéité élastique (6) est positionnée dans la première gorge (7) de l'électrode (1) pour le logement de la bague d'étanchéité (6), la bague d'étanchéité élastique (6) étant moulée au moins partiellement au moyen de plastique,
la première gorge étant prévue et conçue pour le logement de la bague d'étanchéité,
la bague d'étanchéité étant positionnée avant le moulage au moyen du plastique liquéfié,
la bague d'étanchéité (6) étant fabriquée à partir d'un polymère et
la température du plastique étant maintenue sous 350 °C pendant le moulage au moins partiel de la bague d'étanchéité (6).

2. Procédé destiné à la fabrication d'un débitmètre magnéto-inductif selon la revendication 1,
**caractérisé**
**en ce que** l'électrode (1) est réalisée avec une section circulaire ou elliptique ou ovale.

3. Procédé destiné à la fabrication d'un débitmètre magnéto-inductif selon l'une des revendications 1 à 2,
**caractérisé**
**en ce que** l'électrode (1) est munie de gorges (11) supplémentaires, lesquelles sont moulées au moins partiellement avec du plastique liquéfié.

4. Procédé destiné à la fabrication d'un débitmètre magnéto-inductif selon l'une des revendications 1 à 3,
**caractérisé**
**en ce que** l'outil présente un troisième contour complémentaire au premier contour de l'électrode (1) et en ce que le positionnement de l'électrode (1) dans l'outil est effectué par un alignement rigide entre le premier contour complémentaire et le troisième contour.

5. Procédé destiné à la fabrication d'un débitmètre magnéto-inductif selon l'une des revendications 1 à 4,
**caractérisé**
**en ce qu'**un tube de mesure est moulé au moyen de plastique liquéfié et en ce qu'un noyau, lequel forme un canal intérieur du tube de mesure, présente un quatrième contour complémentaire au deuxième contour de l'électrode (1), l'électrode (1) étant positionnée contre le noyau par un alignement rigide entre le deuxième contour et le quatrième contour complémentaire.

6. Procédé destiné à la fabrication d'un débitmètre magnéto-inductif selon l'une des revendications 1 à 4,
**caractérisé**
**en ce que**, dans une première étape de procédé, une paroi (2) du tube de mesure (2) est moulée avec le plastique liquéfié et en ce que, dans une deuxième étape de procédé, une gaine est moulée autour de l'électrode (1), dans un espace libre prévu à cette fin dans la paroi (2) du tube de mesure.

7. Procédé destiné à la fabrication d'un débitmètre magnéto-inductif selon la revendication 6,
**caractérisé**
**en ce que** le même plastique est utilisé dans les deux étapes de procédé.

8. Procédé destiné à la fabrication d'un débitmètre magnéto-inductif selon l'une des revendications 1 à 7,
**caractérisé**
**en ce qu'**au moins la première gorge (7) est réalisée avec une section rectangulaire ou une section circulaire.

9. Procédé destiné à la fabrication d'un débitmètre magnéto-inductif selon l'une des revendications 3 à 8,
**caractérisé**
**en ce qu'**au moins une deuxième gorge (11) de l'électrode (1) est réalisée avec une section en forme de dent de scie,
l'électrode (1) étant positionnée dans le tube de mesure de telle sorte qu'un dos de dent (13) allant d'un fond de dent (16) à une pointe de dent (17) de la section en forme de dent de scie pointe en direction d'un canal intérieur du tube de mesure, lequel canal guide l'écoulement.

10. Débitmètre magnéto-inductif destiné à la mesure du débit volumique ou massique d'un produit dans une conduite, avec un tube de mesure, qui est parcouru par le produit (5) en direction de l'axe longitudinal du tube de mesure, avec un système magnétique, qui est conçu de telle sorte à générer un champ magnétique traversant le tube de mesure pour l'essentiel perpendiculairement à l'axe longitudinal du tube de mesure, avec au moins une électrode de mesure (1) couplée avec le produit, laquelle électrode est disposée dans une zone située pour l'essentiel perpendiculairement au champ magnétique, dans un alésage (10) de la paroi (2) du tube de mesure, **caractérisé en ce que** le débitmètre magnéto-inductif est disponible avec un procédé selon l'une des revendications 1 à 9.
